# EUROPEAN PATENT SPECIFICATION

(11) **EP 2 727 832 B1**
(45) Date of publication and mention of the grant of the patent: **22.06.2016**
(21) Application number: 12400045.6
(22) Date of filing: 31.10.2012
(51) Int. Cl.: B64C 27/04, B64C 27/32, B64C 7/00

(54) **Rotor head of a rotary wing flying machine and method of manufacturing and assembling such a rotor head**
Rotorkopf eines Drehflüglers und Verfahren zur Herstellung und der Montage eines solchen Rotorkopfes
Tête de rotor d'appareil volante à voilure tournante et son procédé de fabrication et d'assemblage

(43) Date of publication of application: 07.05.2014
(73) Proprietor: AIRBUS HELICOPTERS DEUTSCHLAND GmbH, 86609 Donauwörth (DE)
(72) Inventor: D'Alascio, Alessandro, 85540 Haar (DE); Mores, Sebastian, 81479 München (DE); Denecke, Ulrich, 85521 Riemerling (DE); Kuntze-Fechner, Gerald, 83703 Gmund am Tegernsee (DE); Schimke, Dieter, 82008 Unterhaching (DE); Wehle, Christian, 81669 München (DE); Klam, Hans-Philipp, 85051 Ingolstadt (DE)
(74) Representative: Schmid, Rudolf

(56) References cited:
- US-A- 4 566 856
- US-A- 4 759 689
- US-A- 5 156 527

## Description

The invention relates to a rotor head of a rotary wing flying machine with the features of claim 1. The invention further relates to a method of manufacturing and assembling such a rotor head of a rotary wing flying machine with the features of claim 11.

High speed designs of helicopter with streamlined fuselage and retractable undercarriage significantly increase the percentage contribution of rotor hub and pylon to total parasite drag.

The document Wagner, S. N. Problems of Estimating the Drag of a Helicopter, AGARD Conference Proceedings No. 124, Paper No. 8, 1973, pages 5-1 to 5-12 discloses rotor heads which contribute 20-50% to the overall helicopter drag, depending on the fuselage design, i.e. with or without rear loading capability, retracting wheels or skids, dynamic or static air inlets.

Usually a mast fairing shades the swash plate of an open rotor head and a hub-cap is placed at the extremity of the mast fairing. Therefore all the elements, which need to be inspected, are reachable by climbing on the engine cowling. Therefore no element dismounting is needed for inspection.

Full fairings provide sufficient drag benefit if the sealing between rotational and stationary parts is intact, though, wear of the sealing is unavoidable. A "pumping" phenomenon is caused by air flowing in and out of the full fairing due to over and under pressure arising on the hub-cap surface during rotor rotation.

The document US 3 056 456 A discloses a fairing around the mast-extremity and blade attachments. It extends outboard of the pitch and lag hinges. The hub-fairing is closed in itself and separated from the mast-fairing. It allows a blade folding mechanism. The hub-fairing is disconnected from the rotor mast and follows the blade motions. A complex mechanism of springs keeps the fairing elements in contact to each other so that air might not flow inside the fairing.

The document US 3 217 811 A discloses a fairing covering the rotor hub and sealed with the mast fairing. This rotor head fairing is attached to the mast but is free to rotate around an axis coaxial with the mast-axis. Therefore this rotor head fairing is not supported by the blades, it follows the lead-lag motion of the blades. Blade flapping and pitching is assured through a blade-cut-out into the fairing.

The document US 3 310 120 A discloses one closed fairing around the hub and blade sleeves with a blade folding option. The relative motions between the different fairing elements - the ones which follow the hub rotation and the others which follow the blade lead lag motions - is assured by sliding connections. The blade flapping and pitching is assured by a play between the blades and the fairing around them.

The document US 4 212 588 A discloses air flowing in and out of the hub fairing through the blade cut outs. Internal partitions divide the fairing into chambers, each of which subtends one cutout, prevents flow of air through the fairing and attends drag caused thereby.

The document US 4 566 856 A describes a different rotor head system with a faired head.

The document GB 2 158 797 A deals with an aerodynamic flexible fairing for covering rotor connections on a rotor wing aircraft.

The document US 7 510 377 A deals with a fairing for a tilt-rotor aircraft in which contact sealing is used between rotating and non-rotating parts.

The object of the invention is to provide a rotor head of a rotary wing flying machine for an overall rotary wing flying machine drag reduction. It is a further object of the invention to provide a drag reduced rotor head of a rotary wing flying machine with a sufficient life time.

It is a still further object of the invention to provide a method of manufacturing and assembling such a rotor head of a rotary wing flying machine allowing an easy inspection and maintenance of the rotor head components, such as the pitch control rods and the blade bolts.

The solution is provided with a rotor head of a rotary wing flying machine with the features of claim 1 of the invention. A further solution is provided with a method of manufacturing and assembling such a rotor head of a helicopter with the features of claim 11 of the invention. Preferred embodiments of the invention are presented with the subclaims of the invention.

According to the invention a rotor head of a rotary wing flying machine with a fuselage comprises a rotor mast or a rotor shaft extending above said fuselage into said rotor head. A plurality of rotor blades extend from said rotor mast or rotor shaft. Means for attaching said blades to said rotor mast or rotor shaft, e. g. a blade cuff for each blade, permit flapping, pitch and lead-lag blade movements of said blades. A fairing or an aerodynamically shaped hub-cap encloses said rotor mast or rotor shaft and said blade attaching means, said fairing/hub-cap forming a chamber for said rotor mast or rotor shaft and having a peripheral cut-out for each blade through which said blade extends radial from said rotor mast or rotor shaft. Said cut-outs are sized to accommodate all of the blade movements or of said blade attaching means surrounding said blades at the cut-outs encountered in operation. Each of said cut-outs is provided with at least one skirt mounted to a circumference of each of said cut-outs. Said at least one skirt points towards the blade extending through said cut-out with said at least one skirt. Each blade, i. e. each blade cuff, is surrounded with at least one blade collar. Each blade collar provides for a contact free labyrinth sealing with said at least one skirt, said labyrinth seal on rotating parts providing a non-contact sealing action by controlling the passage of air through a variety, i. e. one or more, of chambers/stages by the formation of controlled air vortices to increase pressure loss.

The inventive rotor head of a rotary wing flying machine with a contact-free sealing concept for a fully faired main rotor head consists of several elements, which can be subdivided in three groups: fixed elements, belonging to the mast fairing and connected to the fuselage structure, rotating elements connected to the rotor mast extremity with the hub-cap and elements attached to the blades, which follow the rotation, flapping, lead-lag and pitch motions of the blades. To avoid air flow inside the full-fairing hub a labyrinth sealing is designed between the fixed and the rotating parts of the fairing and between the elements connected to the blades and the mast extremity. The fairing or aerodynamically shaped hub-cap assures parasite drag reduction whereas the labyrinth sealing is responsible for a minimization of the drag due to the air flowing in and out of the full-fairing.

The system is so constructed that the hub-cap can be dismounted quickly by unscrewing few bolts thus allowing visual and manual inspection. The inventive rotor head can be applied to any rotor head system available.

The advantages of this invention are:
It reduces the parasite drag of the hub and reduces as well the turbulence in the rotor head and blade attachment area.

It increases the lift of the rotorcraft.

It increases the empennage efficiency and reduces vibrations due to rotor hub wake interaction with the empennage "tail shake".

It increases the rotary wing flying machine speed at same engine power output.

It reduces the fuel consumption at constant aircraft speed.

It protects the rotor head parts against foreign objects (e.g. sand erosion).

It does not require any contact sealing between rotor head parts, hence produces no wearing or abrasion

It allows an easy dismounting of the hub-cap hence enables visual and manual inspection of the rotor head.

It increases the weight only slightly, if compared to an equivalent standard "open" hub cap and mast fairing.

It leads to no penalty concerning the lifetime of the system.

Maintenance and mandatory pre-flight checks of the contact-free fully faired main rotor are easy to perform.

Such a system is retrofitable with small modifications.

The inventive system can be applied on different rotor head systems, i.e. bearing less, hinge-less, spheriflex, fully articulated.

The inventive system can be applied on rotor heads independent of the number of blades.

The inventive integrated design leads to minimal production costs and tolerances.

According the invention the labyrinth-sealing is contact free, so that air can flow between outer skirts and inner skirts of the hub cap and the blade-collar and enter the inner of the full-fairing rotor head.

According to a further preferred embodiment of the invention a non rotating mast fairing is provided, said mast fairing being substantially coaxial with the fairing/hub-cap along an interface with the fairing/hub-cap. The non rotating mast fairing is provided with a mast fairing lip and the hub cap is provided with a hub cap lip, said mast fairing lip and said hub cap lip being arranged to provide a sealing function between the rotating parts of the rotor head and the non-rotating mast fairing for the inventive rotor head. The mast fairing lip and the lower hub-cap lip provide a 1-stage labyrinth sealing hampering the air entering the inner volume of the hub-cap.

According to a further preferred embodiment of the invention said fairing/hub-cap comprises at least one lower skirt arranged for the contact free labyrinth sealing with said at least one blade collar to improve the sealing efficiency already available trough the mast fairing lip. The respective functionalities of the lower skirts, of the mast fairing lip and of the hub-cap lips correspond to each other.

According to a further preferred embodiment of the invention ribs are mounted to the hub cap from inside, which divide the volume inside the hub-cap into as many chambers as rotor blades - four in our example - to prevent air flowing freely inside the hub-cap and at the same time increase the hub-cap stiffness. In addition to the labyrinth sealing between the hub cap and the mast fairing in relative motion to each other, the subdivided volume inside the hub-cap reduces additionally the "pumping effect".

According to a further preferred embodiment of the invention the hub-cap is connected to the rotor mast through a releasable connecting element. The hub-cap can be dismounted by removing the access cover, unscrewing few bolts and lifting the hub-cap. The releasable connecting element allows easy visual and manual inspection of the components inside the hub-cap.

According to a further preferred embodiment of the invention transparent windows or removable maintenance covers are implemented on the hub cap and on the mast fairing to allow pre-flight checks. Additional windows/maintenance covers are designed in the fairing to inspect a given swash plate and pitch rods.

According to a further preferred embodiment of the invention a method of manufacturing and assembling the components of the rotor head comprises the steps according to claim 11.

Preferred embodiments of the invention are described with reference to the following description and drawings.
Fig. 1 shows a schematic overall view of a rotary wing flying machine's rotor head with a fairing according to the invention,
Fig. 2 shows a schematic overall view of the rotary wing flying machine's rotor head according to Fig. 1 without the blade-collar,
Fig. 3 shows a schematic top view of the rotary wing flying machine's rotor head with the fairing according to the invention,
Fig. 4 shows a cross sectional view along a vertical plane through a mast axis of the rotary wing flying machine's rotor head with the fairing according to the invention,
Fig. 5 shows a cross sectional view along a plane orthogonal to the mast axis of therotary wing flying machine's rotor head with the fairing according to the invention,
Fig. 6 shows a cross sectional view along a vertical plane through the mast of the rotary wing flying machine's rotor head with sealing details of the fairing according to the invention,
Fig. 7 shows a cross sectional view of the rotary wing flying machine's rotor head with further sealing details of the fairing according to the invention,
Fig. 8 shows a cross sectional view of the rotary wing flying machine's rotor head with still further sealing details of the fairing according to the invention,
Fig. 9 shows a cross sectional view of the rotary wing flying machine's rotor head with still further sealing details of the fairing according to the invention,
Fig. 10 shows a cross sectional view of the rotary wing flying machine's rotor head with still further sealing details of the fairing according to the invention,
Fig. 11 shows a cross sectional view of the rotary wing flying machine's rotor head with a variant of the still further sealing details of the fairing according to Fig. 9,
Fig. 12 shows a cross sectional view of the rotary wing flying machine's rotor head with a variant of the still further sealing details of the fairing according to Fig. 8, and
Fig. 13 shows a cross sectional view of the rotary wing flying machine's rotor head with an alternative sealing of the fairing according to the invention.

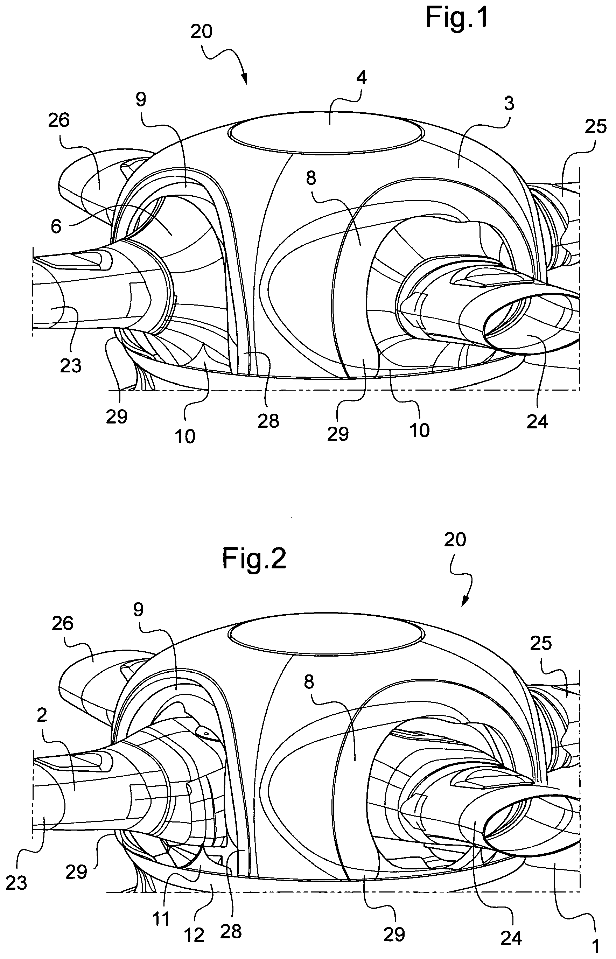

According to Fig. 1 - 4 a rotor head 20 of a rotary wing flying machine (not shown) is mounted on top of a fuselage (not shown). A rotor mast 21 or a rotor shaft 22 extends upwards through a mast fairing 1 above said fuselage into said rotor head 20. The non-rotating mast fairing 1 is provided with an upward oriented mast fairing lip 12 coaxial with said rotor mast 21 or rotor shaft 22. The mast fairing 1 is made of glass fibre reinforced plastics with honey comb cores. The mast fairing lip 12 is made of carbon fibre reinforced plastics.

A vertical plane is along the axis of the rotor mast 21 or rotor shaft 22 and an orthogonal plane is perpendicular to said mast or shaft axis of the rotary wing flying machine's rotor head.

Four rotor blades 23 - 26 are each mounted radial by separate blade attachment means to the rotor mast 21 or the rotor shaft 22 for rotation with the rotor head 20. Said blade attachment means comprise four blade cuffs 2 respectively part of each of said blades 23 - 26.

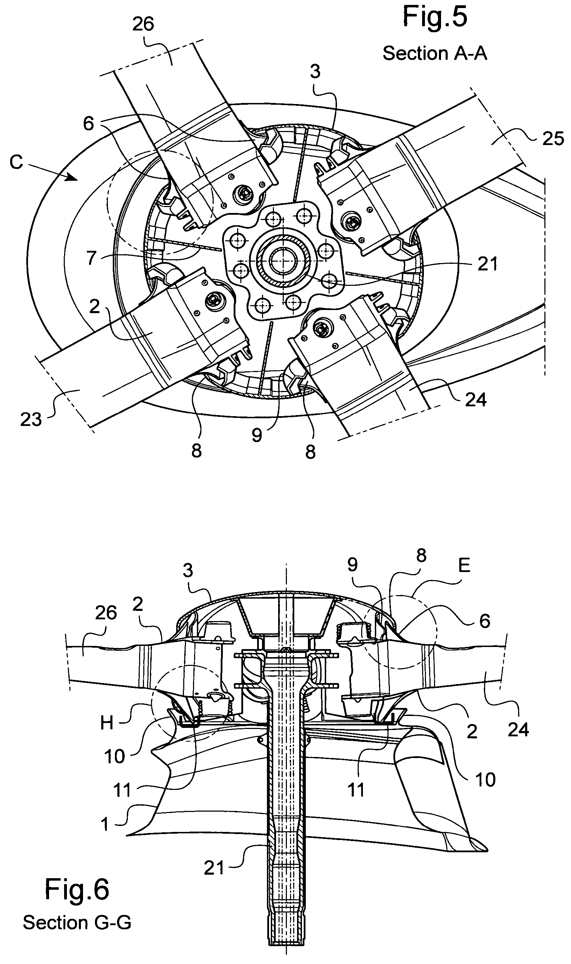

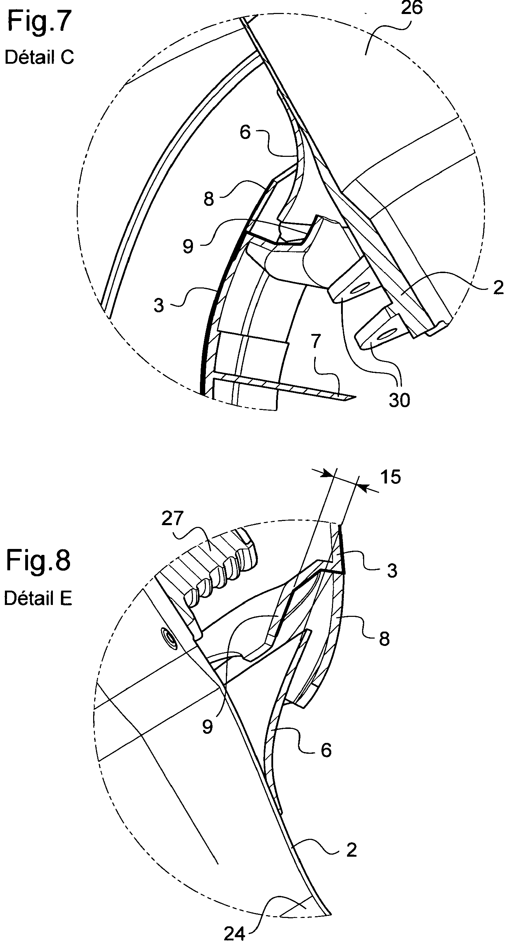

A fairing/aerodynamically shaped hub-cap 3 is mounted to the rotor mast 21 for rotation with said rotor shaft 22. Said fairing/aerodynamically shaped hub-cap 3 and a blade collar 6 (see Fig. 5) enclose said rotor mast 21 or rotor shaft 22, pitch control rod attachment 30 (see Fig. 7) and the portion of said blade-cuff 2 comprised between the rotor mast 21 or rotor shaft 22 and the blade collar 6. Said hub-cap 3 is provided with an essentially circular access cover 4 essentially coaxially above said rotor mast 21 or rotor shaft 22. Said hub cap 3 is coaxially screwed by means of a cup shaped connecting element 5 to said rotor mast 21 or rotor shaft 22. The connecting element 5 is made of fibre reinforced polymers, e. g. carbon fibre reinforced plastics.

Said hub-cap 3 is provided with a hub-cap lip 13 oriented towards the mast fairing 1 and substantially coaxial with said rotor mast 21 or rotor shaft 22. Said lower hub-cap lip 13 interacts as a 1-stage labyrinth sealing with the upper mast fairing lip 12 to hamper air going in or out of the hup cap 3.

Said hub-cap 3 has respectively a peripheral cut-out for each of said blades 23 - 26 to allow passage of said four blades 23 - 26 with said respective blade cuffs 2 radial from said rotor mast 21 or rotor shaft 22 to an outside of the hub-cap 3. Said cut-outs are sized to accommodate all of the movements, i. e. flapping, pitch and lead-lag blade movements of said blades 23 - 26 with said blade cuffs 2 encountered in operation. Lead-lag blade movements of said blades 23 - 26 are attenuated by lead lag dampers 27 mounted to free ends of the blade cuffs 2 next to the rotor mast 21.

Each of said cut-outs is provided with an upper outer skirt 8 and an upper inner skirt 9 mounted along a substantially upper circumference of each of said cut-outs on hub cap 3. Each of said cut-outs is as well provided with a lower outer skirt 10 and a lower inner skirt 11. Each of said lower outer skirt 10 and of said lower inner skirt 11 are mounted by means of two-point mechanical connections, e. g. screws (not shown) to one side 28 of each of said cut-outs, passes below the associated blade 23 - 26 and above said mast fairing 1 to the side 29 opposed to the one side 28 of each of said cut-outs. The lower outer skirt 10 and the lower inner skirt 11 are mounted releasable to the opposed side 29 and are mounted (not shown) pivotable to the one side 28 of said cut out. Each of the skirts 8 - 11 points towards the blade 23 - 26 extending through said cut-out with said skirts 8 - 11. The skirts 8 - 11 are made of carbon fibre reinforced plastics.

The upper skirts 8, 9 are joined together as well as the lower skirts 10, 11. By dismounting the hub-cap 3 and unscrewing the releasable two-point mechanical connections the lower skirts 10, 11 can pivot around the fixed screw giving way to the blade cuff 2 to allow removal of the hub-cap 3 with the lower skirts 10, 11. The lower skirts 10, 11, rotating with the hub cap 3, interact with the stationary mast fairing lip 12 as sealing.

A blade-collar 6 is mounted on each associated blade attachment means, i. e. the blade cuffs 2 on the blades 23 - 26 next to the cut-outs. Each blade-collar 6 is arranged to extend outwardly from the blade cuff 2 in between the inner skirts 9, 11 and the outer skirts 8, 10 of the hub-cap 3 to provide a contact free, two stage labyrinth type sealing hampering air flowing through the cut-outs of the hub-cap 3. The blade-collars 6 are made of carbon fibre reinforced plastics.

The skirts 8 - 11 and the blade-collar 6 are designed not to restrain the motion of the blades 23 - 26 at their passage through the respective cut-outs. Each circumference of the skirts 8 - 11 respectively oriented towards one of the associated blades 23 - 26 is the envelope of all possible blade motions and deformations in limit flight conditions, so that the respective blade cuff 2 does not touch the skirts 8 - 11. Each circumference of the blade collars 2 are respectively oriented from one of the associated blades 23 - 26 towards a respective gap in between the skirts 8 - 11 allowing all possible blade motions and deformations in limit flight conditions, so that the respective circumference of the blade collar 2 does neither touch the skirts 8 - 11 nor the inner circumference of the respective cut-out. The considered blade angles vary between - 18,6 to +25° pitch angle, +5,1 to 11,6° flap angle and +0,9 to 7,1° lead-lag angle. The labyrinth-sealing is contact free, so that air can flow between the respective outer skirts 8, 10, blade-collar 6 and inner skirts 9-11 to enter and leave the turret-like chamber of the rotor head 20.

The carbon fibre layers of the hub-cap 3, the hub-cap lip 13, the upper inner skirt 9, the lower inner skirt 11 and the connecting element 5 are oriented in load directions and are locally supplemented with a honey comb core for improved stiffness.

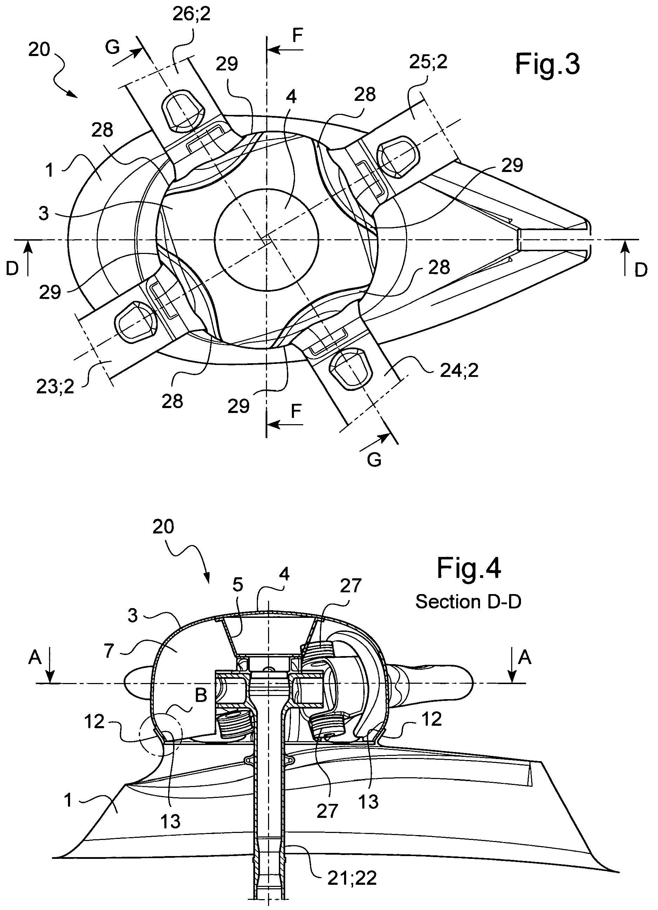

According to Fig. 5 corresponding features are referred to with the references of Fig. 1 - 4. A horizontal cross section view along line A - A of Fig. 4 shows the rotor mast 21 with the attached blades 23 - 26 extending radial through the cut outs in hub-cap 3. Rips 7 are provided between the rotor mast 21 and the hub-cap 3. The rips 7 are made of carbon fibre reinforced plastics.

The blade collar 6 extends from each blade cuff 2 in between the upper skirts 8, 9.

According to Fig. 6 corresponding features are referred to with the references of Fig. 1 - 5. A vertical cross section view along line G - G of Fig. 4 shows the rotor mast 21 through the mast fairing 1 with the attached blades 23 - 26 extending radial through the cut outs in hub-cap 3.

The blade collars 6 extend from each blade cuff 2 towards in between the upper outer skirt 8, the upper inner skirt 9 and towards in between the lower outer skirt 10 and the essentially u-shaped lower inner skirt 11 of the contact free labyrinth sealing.

According to Fig. 7 corresponding features are referred to with the references of Fig. 1 - 6. A cross section view at larger scale of detail C of Fig. 5 shows a section of the attached blade 26 with the surrounding blade cuff 2 extending radial through the cut out in hub-cap 3. The rip 7 extends from the hub-cap 3 towards the rotor mast (not shown). The pitch control rod attachment 30 for a pitch control rod (not shown) is integral with the blade cuff 2.

The curved blade collar 6 extends from the blade cuff 2 towards in between the upper outer skirt 8 and the upper inner skirt 9 of the labyrinth sealing. The upper outer skirt 8 is joined to the polygonal, upper inner skirt 9.

According to Fig. 8 corresponding features are referred to with the references of Fig. 1 - 7. A cross section view at larger scale of detail E of Fig. 6 shows a section of the attached blade 24 with the surrounding blade cuff 2 extending radial through the cut out in hub-cap 3. A lead lag damper 27 is mounted to the blade cuff 2.

The curved blade collar 6 extends from the blade cuff 2 towards in between the upper outer skirt 8 and the upper inner skirt 9 of the contact free labyrinth sealing. The upper outer skirt 8 is joined to the polygonal, upper inner skirt 9. An upper gap 15 is between the upper inner skirt 9 and the blade collar 6 with a minimum distance of 40 mm (± 35 mm).

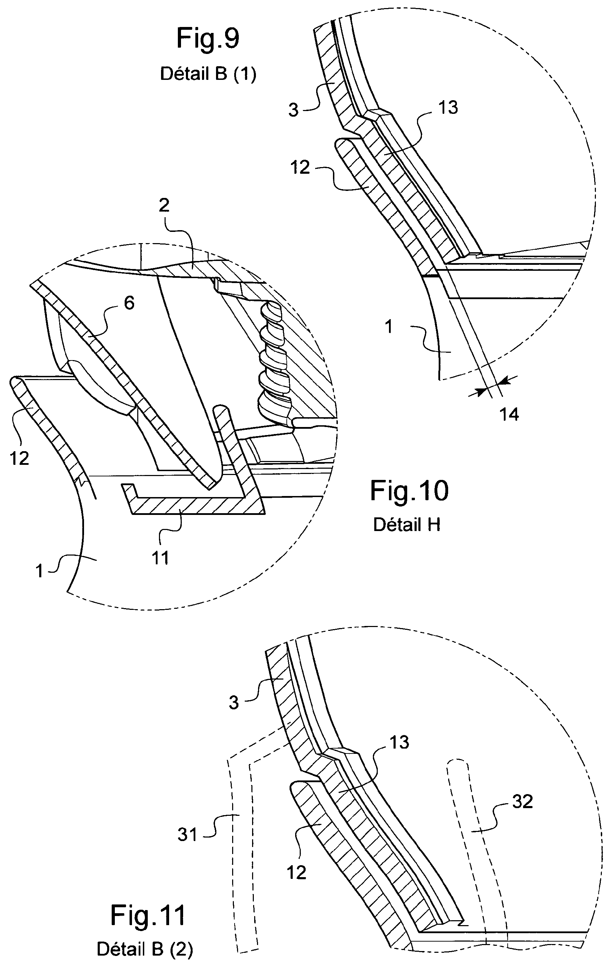

According to Fig. 9 corresponding features are referred to with the references of Fig. 1 - 8. A cross section view at larger scale of detail B of Fig. 4 shows a section of the non rotating mast fairing 1 and the rotating hub-cap 3.

The upper mast fairing lip 12 extends from the mast fairing 1 radial outside along the hub cap lip 13 oriented towards the mast fairing 1. Said lower hub-cap lip 13 interacts as contact free labyrinth sealing with the upper mast fairing lip 12. A lower gap 14 between the upper mast fairing lip 12 and the hub cap lip 13 has a minimum distance of 20 mm (± 15 mm).

According to Fig. 10 corresponding features are referred to with the references of Fig. 1 - 9. A cross section view at larger scale of detail H of Fig. 6 shows a section of the non rotating mast fairing 1 and the rotating blade collar 6.

The upper mast fairing lip 12 extends from the mast fairing 1 approximately along and radial outside the blade collar 6 towards the blade cuff 2. The essentially u-shaped lower inner skirt 11 is provided with an essentially horizontal base and a lip oriented upwards towards the hub cap 3. The blade collar 6 extends from the blade cuff 2 towards the lower inner skirt 11 with the essentially horizontal base and the radial inside lip of the lower inner skirt 11 oriented upwards towards the hub cap 3. Said mast fairing lip 12 and the lower inner skirt 11 interact as contact free labyrinth sealing with the blade collar 6.

According to Fig. 11 corresponding features are referred to with the references of Fig. 1 - 10. A cross section view at larger scale of an alternative of detail B of Fig. 4 shows a section of the non rotating mast fairing lip 12 and the rotating hub-cap 3.

The upper mast fairing lip 12 extends from the mast fairing 1 radial outside along the hub cap lip 13 oriented towards the mast fairing 1. Said lower hub-cap lip 13 interacts as contact free labyrinth sealing with the upper mast fairing lip 12 with the lower gap 14 between the upper mast fairing lip 12 and the hub cap lip 13.

An additional skirt 31 is bonded on the bottom part of the rotating hub-cap 3 radial outward from the hub-cap 3 and radial outward from the mast fairing lip 12. Said at least one additional skirt 31 interlocks with the non-rotating mast fairing lip 12 of the mast fairing 1 to enhance the labyrinth sealing function.

An additional inside skirt 32 is bonded radial inward from the hub-cap lip 13 to the non-rotating mast fairing 1 allowing any vertical movement of the rotating hub cap 3.

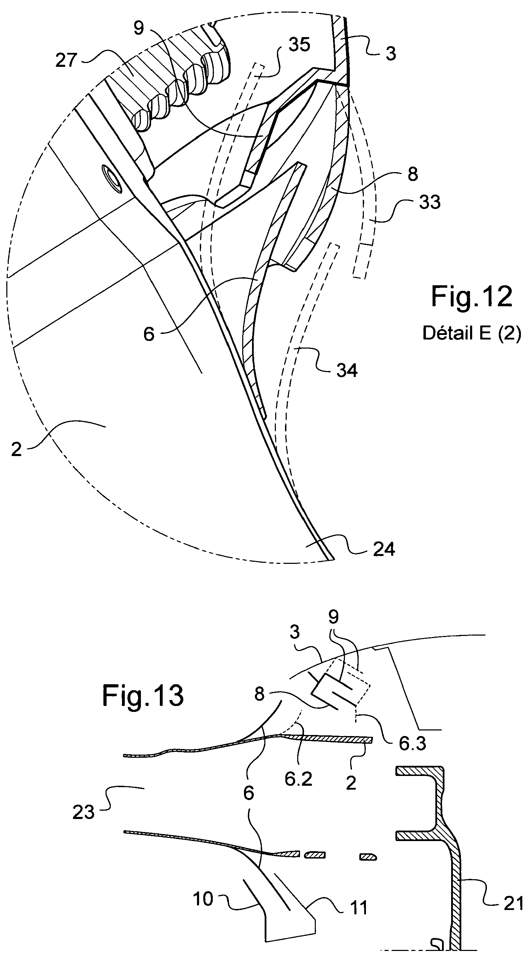

According to Fig. 12 corresponding features are referred to with the references of Fig. 1 - 11. A cross section view at larger scale of detail E of Fig. 6 shows an alternative section of the attached blade 24 with the surrounding blade cuff 2 extending radial through the cut out in hub-cap 3. The lead lag damper 27 is mounted to the blade cuff 2.

The curved blade collar 6 extends from the blade cuff 2 towards in between the upper outer skirt 8 and the upper inner skirt 9 of the contact free labyrinth sealing. The upper outer skirt 8 is joined to the polygonal, upper inner skirt 9.

An additional upper outer skirt 33 is bonded to the rotating hub-cap 3 radial outward from the upper outer skirt 8 and radial outward from the blade collar 6. An additional blade collar 34 is bonded radial projecting from the blade 24 towards in between the additional upper outer skirt 33 and the upper outer skirt 8 bonded to the rotating hub-cap 3. An additional blade cuff collar 35 is bonded radial projecting from the blade cuff 2 towards in between the upper inner skirt 9 bonded to the rotating hub-cap 3 and the lead lag damper 27.

Said at least one additional upper outer skirt 33 interlocks with the additional blade collar 34 of the blade 24 to enhance the labyrinth sealing function.

According to Fig. 13 corresponding features are referred to with the references of Fig. 1 - 12. A schematic cross section view through the rotor mast 21 and the blade 23 shows an alternative sealing of the attached blade 24 with the surrounding blade cuff 2 extending radial through the cut out in hub-cap 3.

The curved blade collar 6 extends from the blade cuff 2 towards in between the lower outer skirt 10 and the lower inner skirt 11 of the contact free labyrinth sealing. The lower outer skirt 10 is joined to the lower inner skirt 11.

Two upper blade collars 6.2, 6.3 are provided. The blade collar 6 and the radial outside upper blade collar 6.2 work as spoiler deviating any air flow away from the blade cuff 2. The radial inside upper blade collar 6.3 is part of the labyrinth sealing together with the new positioned upper outer skirt 8 and the upper inner skirt 9. The radial inside upper blade collar 6.3 is placed with a minimum distance of 10 mm in front of the lead lag damper 27. The transversal motions of the blade collar 6, e. g. flapping and lead-lag and deformations are smaller, e. g. in the range of 25 mm instead of 40 mm, because the upper blade collars 6.2 and 6.3 are placed at a radial station with a radial distance of only about 260 mm to the lead lag damper than the blade collar 6 shown in Fig. 6, allowing smaller distances between the blade collar 6.3 and the upper skirts 8-9, thus increasing the effectiveness of the labyrinth sealing. The upper blade collar 6.3 and the upper inner skirt 9 may be two stage.

Manufacturing and assembly of the rotor head components:
The hub-cap 3, the hub-cap lip 13, the upper inner skirt 9, the lower inner skirt 11 and the connecting element 5 are manufactured in one multi-segmented negative mould to assure their correct alignment. The carbon fibre layers of the components are oriented in load directions and are locally supplemented with a honey comb core for more stiffness. All other components of the full fairing, i. e. the access cover 4, blade-collars 6, ribs 7, upper outer skirt 8, lower outer skirt 10, mast fairing lip 12 and hub-cap lip 13 are made of fibre reinforced polymers, e. g. solid carbon fibre laminates. The upper outer skirt 8 and the ribs 7 are bonded permanently to the basic hub-cap 3.

The cut outs of the hubcap 3, the elements 8-11 and 13 allow the hub-cap 3 to be removed in vertical direction without removing the blade collars 6 bonded permanently to the blade cuffs 2. To remove/install the whole hub-cap 3, connecting element 5, upper inner skirt 9 and lower inner skirt 11 the access cover 4 has to be unscrewed and removed from the hub-cap 3 in order to reach the screws fixing connecting element 5 to the rotor mast 21. The mast fairing 1 and the mast fairing lip 12 are manufactured of carbon fibre with honey combs to improve the stiffness.

### Reference List

- 1.: mast fairing
- 2.: blade cuffs
- 3.: hub-cap
- 4.: access cover
- 5.: connecting element
- 6.: blade-collar
- 7.: ribs
- 8.: upper outer skirt
- 9.: upper inner skirt
- 10.: lower outer skirt
- 11.: lower inner skirt
- 12.: mast fairing lip
- 13.: hub-cap lip
- 14.: lower gap between mast fairing and hub-cap
- 15.: upper gap between blade collar and upper inner skirt
- 20.: rotor head
- 21.: rotor mast
- 22.: rotor shaft
- 23: blade
- 24: blade
- 25: blade
- 26: blade
- 27: lead lag damper
- 28: side
- 29: opposed side
- 30: pitch control rod attachment
- 31: additional skirt
- 32: additional inside skirt
- 33: additional upper outer skirt
- 34: additional blade collar
- 35: additional blade cuff collar 35

## Claims

1. A rotor head (20) for a rotary wing flying machine, the rotary wing flying machine comprising:
- a fuselage,
- a rotor mast (21) or a rotor shaft (22) extending above said fuselage,
- a plurality of rotor blades (23 - 26) extending radial from said rotor mast (21) or rotor shaft (22), the rotor head comprising:
- means (2) for attaching said blades (23 - 26) to said rotor mast (21) or rotor shaft (22) permitting blade movements and deformations of said blades (23 - 26) and
- a fairing/ aerodynamically shaped hub-cap (3) suitable for partly enclosing said rotor mast (21) or rotor shaft (22) and said blade attaching means (2), said fairing/hub-cap (3) forming a chamber for a part of said rotor mast (21) or rotor shaft (22) and having a peripheral cut-out for each blade (23 - 26) through which said blade (23-26) can extend radial from said rotor mast (21) or rotor shaft (22), said cut-outs being sized to accommodate the movements and deformations of said blades (23 - 26) with said blade attaching means (2) encountered in operation,
- each of said cut-outs being provided with at least one skirt (8 - 11) mounted to a circumference of each of said cut-outs, said at least one skirt (8 - 11) being suitable for pointing towards the blade (23
- 26) extending through said cut-out with said at least one skirt (8 -11),
- one blade collar (6) for each blade (23-26) suitable for surrounding said blade (23-26),
- **characterized in that** each blade collar (6), when mounted, provides for a contact free labyrinth sealing with said at least one skirt (8 - 11).

2. The rotor head (20) according to claim 1, **characterized in that** said blade movements comprise flapping, pitch and lead-lag movements.

3. The rotor head (20) according to claim 1, **characterized in that** said blade attaching means are a blade cuff (2) around each of the blades (23 - 26) and **in that** the blade collar (6) is mounted around said blade cuff (2).

4. The rotor head (20) according to claim 1, **characterized in that** the contact free labyrinth-sealing comprises at least one outer skirt (8,10) and at least one inner skirt (9, 11) mounted to the hub cap (3) for interaction with the blade-collar (6).

5. The rotor head (20) according to claim 1, **characterized in that** a mast fairing (1), a mast fairing lip (12) and a hub cap lip (13) are provided, said mast fairing (1) being substantially coaxial with the fairing/hub-cap (3) along an interface with the fairing/hub-cap (3) and **in that** said mast fairing lip (12) and said hub cap lip (13) provide a sealing function.

6. The rotor head (20) according to claim 1, **characterized in that** said fairing/hub-cap (3) comprises at least one lower skirt (10, 11) arranged for the contact free labyrinth sealing with said at least one blade collar (6).

7. The rotor head (20) according to claim 1, **characterized in that** ribs (7) are mounted inside the hub cap (3), which divide the volume inside the hub-cap (3) into as many chambers as rotor blades (23 - 26).

8. The rotor head (20) according to claim 1, **characterized in that** the cut-outs are sized to accommodate all of the movements of said blades (23 - 26) with said blade attaching means (2) surrounding said blades (23 - 26) at the cut-outs.

9. The rotor head (20) according to claim 1, **characterized in that** the hub-cap (3) is connected to the rotor mast (21) through a releasable connecting element (5).

10. The rotor head (20) according to claim 1, **characterized in that** transparent windows or removable maintenance covers are implemented on the hub cap (3) and on the mast fairing (1).

11. A method of manufacturing and assembling the components of the rotor head (20) according to claim 4 wherein the inner skirt (9, 11) comprises an upper inner skirt (9) and a lower inner skirt (11) and the outer skirt (8, 10) comprises an upper outer skirt (8) and a lower outer skirt (10), the method comprising the following steps:
- providing an access cover (4) in the hub cap (3), a connecting element (5), a hub cap lip (13), a mast fairing (1) and a mast fairing lip (12),
- manufacturing the hub-cap (3), the hub-cap lip (13), the upper inner skirt (9), the lower inner skirt (11) and the connecting element (5) in one multi-segmented negative mould,
- making the hub cap (3), i. e. the access cover (4), blade-collars (6), ribs (7), upper outer skirt (8), lower outer skirt (10), mast fairing lip (12) and hub-cap lip (13) of fibre reinforced polymers,
- bonding the upper outer skirt (8) and the ribs (7) permanently to the fairing/hub-cap (3),
- install the hub-cap (3) by first
unscrewing and removing the access cover (4) in order to reach
the screws and afterwards by
fixing connecting element (5), upper inner skirt (9) and lower inner skirt (11) to the rotor mast (21), and
- connecting the mast fairing (1) and the mast fairing lip (12), the mast fairing (1) being manufactured of carbon fibre with honey combs.

## Patentansprüche

1. Rotorkopf (20) für einen Drehflügler, wobei der Drehflügler aufweist:
- einen Rumpf,
- einen Rotormast (21) oder eine Rotorwelle (22), der bzw. die sich über den Rumpf erstreckt,
- eine Mehrzahl von Rotorblättern (23-26), die sich radial von dem Rotormast (21) oder der Rotorwelle (22) erstrecken,
- wobei der Rotorkopf aufweist:
- Mittel (2) zum Befestigen der Rotorblätter (23-26) an dem Rotormast (21) oder der Rotorwelle (22), wobei die Befestigungsmittel Rotorblattbewegungen und Verformungen der Rotorblätter (23-26) erlauben, und
- eine Verkleidung/aerodynamisch geformte Nabenkappe (3), die geeignet ist, den Rotormast (21) oder die Rotorwelle (22) und die Rotorblattbefestigungsmittel (2) teilweise zu umschließen, wobei die Verkleidung/Nabenkappe (3) eine Kammer für einen Teil des Rotormastes (21) oder der Rotorwelle (22) bildet, und einen umfangsseitigen Ausschnitt für jedes Rotorblatt (23-26) aufweist, durch welchen sich das Rotorblatt (23-26) radial von dem Rotormast (21) oder der Rotorwelle (22) erstrecken kann, wobei die Ausschnitte bemessen sind, um die Bewegungen und Verformungen der Rotorblätter (23-26) mit den Rotorblattbefestigungsmitteln (2) aufzunehmen, den diese im Betrieb ausgesetzt sind,
- wobei jeder dieser Ausschnitte mit mindestens einer Randleiste (8-11) versehen ist, die an dem Umfang eines jeden Ausschnitts montiert ist, wobei die wenigstens eine Randleiste (8-11) geeignet ist, zu dem Rotorblatt (23-26) gerichtet zu sein, das sich durch den Ausschnitt mit der mindestens einen Randleiste (8-11) erstreckt,
- eine Rotorblattmanschette (6) für jedes Rotorblatt (23-26), die geeignet ist, das Rotorblatt (23-26) zu umgeben,
**dadurch gekennzeichnet, dass** jede Rotorblattmanschette (6), wenn sie montiert ist, eine kontaktfreie Labyrinthdichtung mit der mindestens einen Randleiste (8-11) bildet.

2. Rotorkopf (20) nach Anspruch 1, **dadurch gekennzeichnet, dass** die Rotorblattbewegungen Flatter-, Nick- und Schwenkbewegungen umfassen.

3. Rotorkopf (20) nach Anspruch 1, **dadurch gekennzeichnet, dass** die Rotorblattbefestigungsmittel durch eine Rotorblattmuffe (2), die um jedes der Rotorblätter (23-26) herum angeordnet ist, gebildet werden, und dadurch, dass die Rotorblattmanschette (6) um die Rotorblattmuffe (2) herum montiert ist.

4. Rotorkopf (20) nach Anspruch 1, **dadurch gekennzeichnet, dass** die kontaktfreie Labyrinthdichtung mindestens eine äußere Randleiste (8, 10) und mindestens eine innere Randleiste (9, 11) aufweist, die an der Nabenkappe (3) zum Zusammenwirken mit der Rotorblattmanschette (6) montiert sind.

5. Rotorkopf (20) nach Anspruch 1, **dadurch gekennzeichnet, dass** eine Mastverkleidung (1), eine Mastverkleidungslippe (12) und eine Nabenkappenlippe (13) vorgesehen sind, wobei die Mastverkleidung (1) im Wesentlichen koaxial zu der Verkleidung/Nabenkappe (3) entlang einer Grenzfläche mit der Verkleidung/Nabenkappe (3) ausgerichtet ist, und dadurch, dass die Mastverkleidungslippe (12) und die Nabenkappenlippe (13) eine Abdichtungsfunktion erfüllen.

6. Rotorkopf (20) nach Anspruch 1, **dadurch gekennzeichnet, dass** die Verkleidung/Nabenkappe (3) mindestens eine untere Leiste (10, 11) aufweist, die für die kontaktfreie Labyrinthdichtung mit der mindestens einen Rotorblattmanschette (6) angeordnet ist.

7. Rotorkopf (20) nach Anspruch 1, **dadurch gekennzeichnet, dass** Rippen innerhalb der Nabenkappe (3) montiert sind, die das Innenvolumen der Nabenkappe (3) in so viele Kammern unterteilen, wie es Rotorblätter (23-26) gibt.

8. Rotorkopf (20) nach Anspruch 1, **dadurch gekennzeichnet, dass** die Ausschnitte so bemessen sind, dass sie alle Bewegungen der Rotorblätter (23-26) mit den Rotorblattbefestigungsmitteln (2), die die Rotorblätter (23-26) an den Ausschnitten umgeben, aufnehmen.

9. Rotorkopf (20) nach Anspruch 1, **dadurch gekennzeichnet, dass** die Nabenkappe (3) durch ein lösbares Verbindungselement (5) mit dem Rotormast (21) verbunden ist.

10. Rotorkopf (20) nach Anspruch 1, **dadurch gekennzeichnet, dass** transparente Fenster oder entfernbare Instandsetzungsabdeckungen auf der Nabenkappe (3) und auf der Mastverkleidung (1) ausgebildet sind.

11. Verfahren zur Herstellung und zum Zusammenbau der Komponenten des Rotorkopfs (20) nach Anspruch 4, wobei die innere Leiste (9, 11) eine obere innere Leiste (9) und eine untere innere Leiste (11) aufweist, und die äußere Leiste (8, 10) eine obere äußere Leiste (8) und eine untere äußere Leiste (10) aufweist, wobei das Verfahren folgende Schritte aufweist:
- Vorsehen eines Zugangsdeckels (4) in der Nabenkappe (3), eines Verbindungselements (5), einer Nabenkappenlippe (13), einer Mastverkleidung (1) und einer Mastverkleidungslippe (12),
- Herstellen der Nabenkappe (3), der Nabenkappenlippe (13), der oberen inneren Leiste (9), der unteren inneren Leiste (11) und des Verbindungselements (5) in einer multisegmentierten negativen Form,
- Herstellen der Nabenverkleidung/Nabenkappe (3), d.h., des Zugangsdeckels (4), der Rotorblattmanschetten (6), Rippen (7), der oberen äußeren Leiste (8), der unteren äußeren Leiste (10), der Mastverkleidungslippe (12) und der Nabenkappenlippe (13) aus faserverstärkten Polymeren,
- dauerhaftes Verbinden der oberen äußeren Leiste (8) und der Rippen (7) mit der Verkleidung/Nabenkappe (3),
- Installieren der Nabenkappe (3) zuerst durch Abschrauben und Entfernen des Zugangsdeckels (4), um die Schrauben zu erreichen, und danach durch Befestigen des Verbindungselements (5), der oberen inneren Leiste (9) und der unteren inneren Leiste (11) an dem Rotormast (21), und
- Verbinden der Mastverkleidung (1) und der Mastverkleidungslippe (12), wobei die Mastverkleidung (1) aus Carbonfasern mit Bienenwabenstruktur hergestellt ist.

## Revendications

1. Tête de rotor (20) pour machine volante à voilure tournante, la machine volante à voilure tournante comprenant :
- un fuselage,
- un mât rotor (21) ou un arbre rotor (22) s'étendant au-dessus dudit fuselage,
- une pluralité de pales de rotor (23 - 26) s'étendant radialement depuis ledit mât rotor (21) ou l'arbre rotor (22), la tête de rotor comprenant :
- des moyens (2), pour fixer lesdites pales (23 - 26) sur ledit mât rotor (21) ou l'arbre rotor (22), permettant des mouvements des pales et des déformations desdites pales (23 - 26) et
- un carénage / cache-moyeu (3) aérodynamique, apte à entourer partiellement ledit mât rotor (21) ou arbre rotor (22) et ledit moyen de fixation de pale (2), ledit carénage / cache-moyeu (3) formant une chambre pour une partie dudit mât rotor (21) ou arbre rotor (22) et ayant une découpe périphérique pour chaque pale (23 - 26), à travers laquelle ladite pale (23 - 26) peut s'étendre radialement depuis ledit mât rotor (21) ou arbre rotor (22), lesdites découpes étant dimensionnées pour permettre les mouvements et déformations desdites pales (23 - 26) lorsque ledit moyen de fixation de pale (2) est en service,
- chacune desdites découpes étant munies d'au moins une collerette (8 - 11), montée sur une circonférence de chacune desdites découpes, ladite au moins une collerette (8 - 11) étant apte à être orientée vers la pale (23 - 26) qui s'étend à travers ladite découpe avec ladite au moins une collerette (8 - 11),
- un collet (6) de pale pour chaque pale (23 - 26), apte à entourer ladite pale (23 - 26),
- **caractérisée en ce que** chaque collet (6) de pale, lorsqu'il est monté, fournit une étanchéité à labyrinthe sans contact avec ladite au moins une collerette (8 - 11).

2. Tête de rotor (20) selon la revendication 1, **caractérisée en ce que** lesdits mouvements de pale comprennent des mouvements de battement, de tangage et de traînée.

3. Tête de rotor (20) selon la revendication 1, **caractérisée en ce que** lesdits moyens de fixation de pale sont une ferrure de pied de pale (2) disposé autour de chacune des pales (23 - 26) et **en ce que** le collet (6) de pale est monté autour de ladite ferrure de pied de pale (2).

4. Tête de rotor (20) selon la revendication 1, **caractérisée en ce que** l'étanchéité à labyrinthe sans contact comprend au moins une collerette extérieure (8, 10) et au moins une collerette intérieure (9, 11), montées sur le cache-moyeu (3) pour une interaction avec le collet (6) de pale.

5. Tête de rotor (20) selon la revendication 1, **caractérisée en ce qu'**un carénage de mât (1), un rebord de carénage de mât (12) et un rebord de cache-moyeu (13) sont prévus, ledit carénage de mât (1) étant sensiblement coaxial avec le carénage / cache-moyeu (3) le long d'une interface avec le carénage / cache-moyeu (3) et **en ce que** ledit rebord de carénage de mât (12) et ledit rebord de cache-moyeu (13) prévoient une fonction d'étanchéité.

6. Tête de rotor (20) selon la revendication 1, **caractérisée en ce que** ledit carénage / cache-moyeu (3) comprend au moins une collerette inférieure (10, 11), agencée pour l'étanchéité à labyrinthe sans contact avec ledit au moins un collet (6) de pale.

7. Tête de rotor (20) selon la revendication 1, **caractérisée en ce que** des nervures (7) sont disposées à l'intérieur du cache-moyeu (3), qui divisent le volume à l'intérieur du cache-moyeu (3) en autant de chambres que de pales (23 - 26) de rotor.

8. Tête de rotor (20) selon la revendication 1, **caractérisée en ce que** les découpes sont dimensionnées pour permettre l'ensemble des mouvements desdites pales (23 - 26), lesdits moyens de fixation de pale (2) entourant lesdites pales (23 - 26) au niveau des découpes.

9. Tête de rotor (20) selon la revendication 1, **caractérisée en ce que** le cache-moyeu (3) est relié au mât rotor (21) par le biais d'un élément de raccordement amovible (5).

10. Tête de rotor (20) selon la revendication 1, **caractérisée en ce que** des fenêtre transparentes ou des volets de maintenance amovibles sont mis en place sur le cache-moyeu (3) et sur le carénage du mât (1).

11. Procédé de fabrication et d'assemblage des composants de la tête de rotor (20) selon la revendication 4, dans lequel la collerette intérieure (9, 11) comprend une collerette intérieure supérieure (9) et une collerette intérieure inférieure (11) et la collerette extérieure (8, 10) comprend une collerette extérieure supérieure (8) et une collerette extérieure inférieure (10), le procédé comprenant les étapes suivantes, consistant à :
- prévoir un cache d'accès (4) dans le cache-moyeu (3), un élément de raccordement (5), un rebord de cache-moyeu (13), un carénage de mât (1) et un rebord de carénage de mât (12),
- fabriquer le cache-moyeu (3), le rebord de cache-moyeu (13), la collerette intérieure supérieure (9), la collerette intérieure inférieure (11) et l'élément de raccordement (5) dans un moule négatif multisegmenté,
- faire le cache-moyeu (3), c.à.d. le cache d'accès (4), les collets (6) de pale, les nervures (7), la collerette extérieure supérieure (8), la collerette extérieure inférieure (10), le rebord de carénage de mât (12) et le rebord de cache-moyeu (13) dans des polymères renforcés de fibres,
- coller la collerette extérieure supérieure (8) et les nervures (7) de manière permanente sur le carénage / le cache-moyeu (3),
- installer le cache-moyeu (3) en dévissant tout d'abord puis en enlevant le cache d'accès (4), afin d'atteindre les vis et en fixant par la suite l'élément de raccordement (5), la collerette intérieure supérieure (9) et la collerette intérieure inférieure (11) sur le mât formant rotor (21) et
- relier le carénage de mât (1) et le rebord du carénage de mât (12), le carénage de mât (1) étant fabriqué à partir de fibre de carbone en nids d'abeilles.
